# EUROPEAN PATENT APPLICATION

(11) **EP 2 546 391 A2**
(43) Date of publication of application: **16.01.2013**
(21) Application number: 11184770.3
(22) Date of filing: 12.10.2011
(51) Int. Cl.: C25D 17/06, C25D 17/00, H01L 21/288

(54) **Feeding belt for strip-shaped elements**

(30) Priority: 12.07.2011 KR 20110068754
(71) Applicant: Astjetec Co., Ltd., Incheon 403-858 (KR)
(72) Inventor: Chung, Jae Song, 157-734 Seoul (KR); Jeon, Joon Bae, 407-723 Incheon (KR); Shin, Yong Wook, 403-909 Incheon (KR)
(74) Representative: Hano, Christian

(57) **Abstract**

A feeding belt for strip-shaped elements is disclosed. The feeding belt for strip-shaped elements is configured so that, in an automated inline process, such as a plating process, during mass production of semiconductors or other elements, fingers are coupled to a belt main body in a predetermined pitch interval, a strip-shaped element is fed in a state in which the strip-shaped element is gripped between the belt main body and the fingers, gripping protrusions to grip the strip-shaped element are formed at one side of the belt main body in a predetermined pitch interval, a depression part is formed between each of the gripping protrusions and a neighboring one of the gripping protrusions, an installation long hole, in which a gripping end of each of the fingers is fitted, is provided at the rear part of the middle of each of the gripping protrusions, the gripping end of each of the fingers is located at the middle of a corresponding one of the gripping protrusions during the installation of the fingers, and the end portion of each of the gripping ends coincides with the end portion of a corresponding one of the gripping protrusions.

## Description

### BACKGROUND OF THE INVENTION

### Field of the Invention

The present invention relates to a feeding belt which is used to feed strip-shaped elements during a processing process, such as a plating process, so as to manufacture semiconductors or other elements, and more particularly to a feeding belt for strip-shaped elements that is capable of minimizing the occurrence of an unplated portion at which plating has not been carried out due to overlap portions at which the belt and a strip-shaped element overlap each other during a plating process, thereby lowering a plating defect ratio.

### Description of the Related Art

A conventional feeding belt for strip-shaped elements, in which fingers are detachably coupled to a belt, is disclosed, for example, in U.S. Patent No. 5,024,745. As shown in FIGS. 1 and 2, a belt main body 1 and fingers 2 are separately manufactured, and then the fingers 2 are mounted to the belt main body 1. When a strip-shaped element 3 is loaded on the belt main body 1, the strip-shaped element 3 is fitted between the belt main body 1 and front ends 2a of the respective fingers 2. At this time, the strip-shaped element 3 is provided at one side thereof with a belt overlap portion 3a at which the strip-shaped element 3 overlaps with the belt main body 1. Also, the strip-shaped element 3 is provided at one side thereof with finger overlap portions 3b at which the front ends 2a of the fingers 2 overlap with the strip-shaped element 3. As a result, during a plating process, a plating solution is not applied to the belt overlap portion 3a and the finger overlap portions 3b. That is, portions of the strip-shaped element 3 corresponding to the belt overlap portion 3a and the finger overlap portions 3b are not plated. The size of the unplated portions of the strip-shaped element 3 may exceed a critical value required for quality control with the result that the strip-shaped element 3 may be defective during the plating process.

In particular, the belt overlap portion 3a is formed on a portion of the upper part of the strip-shaped element 3 in the longitudinal direction of the strip-shaped element 3 so that the belt overlap portion 3a has a predetermined width with the result that the unplated portion of the strip-shaped element 3 has a predetermined width in the same manner, which causes product defects. Also, the finger overlap portions 3b overlapping with the strip-shaped element 3 are formed at the front ends 2a of the respective fingers 2 in a U shape with the result that the unplated portion of the strip-shaped element 3 is formed in the same manner, which is not preferable.

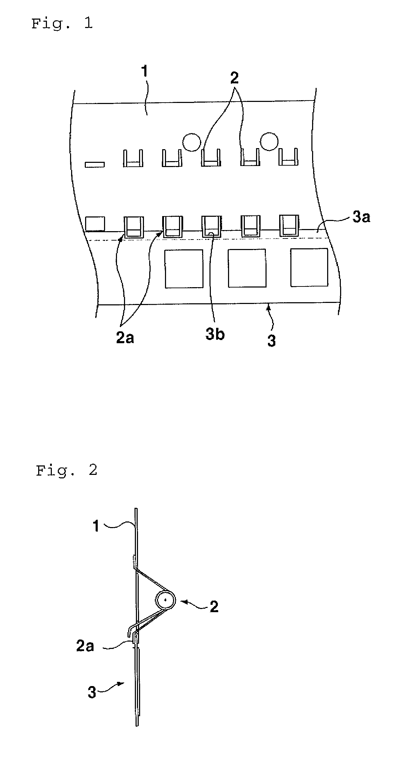

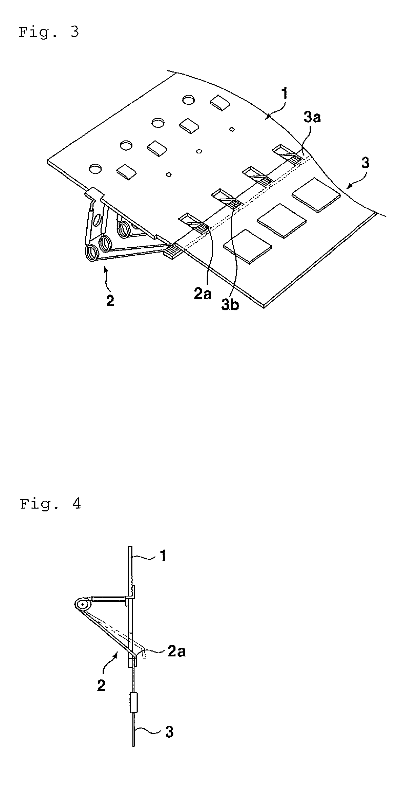

Another conventional feeding belt for strip-shaped elements, in which fingers 2 are detachably coupled to a belt 1 as shown in FIGS. 3 and 4, is also well known. In this conventional feeding belt for strip-shaped elements, a plurality of slits 1b is partially formed at the belt 1. When a strip-shaped element 3 is loaded on the belt 1 and a plating process is carried out, however, the remaining portion of the belt 1 excluding the slits 1b becomes a belt overlap portion 3c, which is an unplated portion of the strip-shaped element 3. Also, finger overlap portions 3b overlapping with the strip-shaped element 3 are formed at front ends 2a of the respective fingers 2 in a U shape in the same manner as in FIGS. 1 and 2 with the result that the unplated portion of the strip-shaped element 3 is formed in the same manner, which is not preferable.

### SUMMARY OF THE INVENTION

Therefore, the present invention has been made in view of the above problems, and it is an object of the present invention to provide a feeding belt for strip-shaped elements configured so that fingers can be detachably coupled to a belt main body, wherein a strip-shaped element is loaded between the belt main body and the fingers, when the strip-shaped element is plated in a state in which the strip-shaped element is dipped in a plating bath during a plating process, the strip-shaped element mounted between the belt main body and the fingers minimizes overlap portions between the strip-shaped element and the belt main body or the fingers with the result that after the plating process, an unplated portion of the strip-shaped element is minimized, thereby satisfying conditions required for quality control and thus reducing a product defect ratio.

It is another object of the present invention to provide a feeding belt for strip-shaped elements wherein, during feeding of a strip-shaped element, the strip-shaped element is sufficiently gripped so that the strip-shaped element is not moved or separated between the belt main body and the fingers although the strip-shaped element mounted between the belt main body and the fingers minimizes overlap portions between the strip-shaped element and the belt main body or the fingers, thereby achieving stable operation of the feeding belt for strip-shaped elements.

In accordance with the present invention, the above and other objects can be accomplished by the provision of a feeding belt for strip-shaped elements configured so that, in an automated inline process, such as a plating process, during mass production of semiconductors or other elements, fingers are coupled to a belt main body in a predetermined pitch interval, a strip-shaped element is fed in a state in which the strip-shaped element is gripped between the belt main body and the fingers, gripping protrusions to grip the strip-shaped element are formed at one side of the belt main body in a predetermined pitch interval, a depression part is formed between each of the gripping protrusions and a neighboring one of the gripping protrusions, an installation long hole, in which a gripping end of each of the fingers is fitted, is provided at the rear part of the middle of each of the gripping protrusions, the gripping end of each of the fingers is located at the middle of a corresponding one of the gripping protrusions during the installation of the fingers, and the end portion of each of the gripping ends coincides with the end portion of a corresponding one of the gripping protrusions.

Each of the gripping protrusions may have a bent projection formed at the middle thereof in the longitudinal direction thereof so that the strip-shaped element can come into line contact with the bent projection.

Each of the bent projections may include a rear inclined part formed at a region thereof adjacent to the belt main body and a front vertical part formed at a region thereof connected to the rear inclined part.

The gripping end of each of the fingers may be bent so as to coincide with the rear inclined part and the front vertical part so that the strip-shaped element can be gripped between the front vertical parts of the bent projections and the gripping ends of the fingers in a state in which the front vertical parts and the gripping ends are in tight contact with each other or are pressed against each other.

Each of the gripping protrusions may have a width gradually decreased from a region thereof adjacent to the belt main body to a region thereof distant from the belt main body.

The belt main body may include mount holes, in which mount parts and support parts of the fingers are coupled, and installation long holes, in which the gripping ends of the fingers are coupled, the installation long holes being formed so that an operation position is movable, and each of the mount holes may be formed at the upper part of the belt main body halfway between each of the installation long holes and a neighboring one of the installation long holes so that the fingers can be easily coupled in the mount holes, and the fingers can smoothly operate in a state in which the left and right sides of the fingers are balanced.

Each of the fingers may include a mount part provided at an end of the upper part thereof, a support part extending from a position adjacent to the mount part in the shape of a coil spring to elastically support the belt main body and each of the fingers, a coupling part provided between the mount part and the support part so that the coupling part is fitted in a corresponding one of the mount holes, an angle change hinge part extending from a position adjacent to the support part in the shape of a coil spring to apply elastic gripping force to a gripping end located at the end of the lower part of the belt main body, which is opposite to the mount part, and to serve as a hinge, and a bent part extending from a position adjacent to the angle change hinge part and bent so that the gripping end is located at the end of the bent part.

Each of the fingers may be formed so that coupling parts, support parts, angle change hinge parts, bent parts and the gripping ends are provided in a bilaterally symmetrical fashion with respect to the middle of the mount part. Also, the coupling parts may be fitted in a corresponding one of the mount holes of the belt main body, and the gripping ends may be fitted in the corresponding installation long holes, whereby each of the fingers are bilaterally balanced, and therefore, stable operation of each of the fingers is achieved.

The gripping end of each of the fingers may have a cylindrical section.

In the feeding belt for strip-shaped elements configured so that the fingers can be detachably coupled to the belt main body according to the embodiment of the present invention, the strip-shaped element is loaded between the belt main body and the fingers. When the strip-shaped element is plated in a state in which the strip-shaped element is dipped in a plating bath during a plating process, the strip-shaped element mounted between the belt main body and the fingers minimizes overlap portions between the strip-shaped element and the belt main body or the fingers with the result that after the plating process, an unplated portion of the strip-shaped element is minimized, thereby satisfying conditions required for quality control and thus reducing a product defect ratio. Also, during feeding of the strip-shaped element, the strip-shaped element is sufficiently gripped so that the strip-shaped element is not moved or separated between the belt main body and the fingers although the strip-shaped element mounted between the belt main body and the fingers minimizes overlap portions between the strip-shaped element and the belt main body or the fingers, thereby achieving stable operation of the feeding belt for strip-shaped elements.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a front view showing a conventional feeding belt for strip-shaped elements;
FIG. 2 is a side view of FIG. 1;
FIG. 3 is a perspective view, partially omitted, showing the external appearance of another conventional feeding belt for strip-shaped elements;
FIG. 4 is a side view of FIG. 3;
FIG. 5 is a front view showing a feeding belt for strip-shaped elements according to an embodiment of the present invention;
FIG. 6 is a bottom view of FIG. 5;
FIG. 7 is a bottom perspective view of FIG. 5;
FIG. 8 is an enlarged view showing a principal part of FIG. 6;
FIG. 9 is a right side view of FIG. 5; and
FIG. 10 is an enlarged view showing a principal part of FIG. 9.

### DETAILED DESCRIPTION OF THE INVENTION

Now, a preferred embodiment of the present invention will be described in detail with reference to the accompanying drawings.

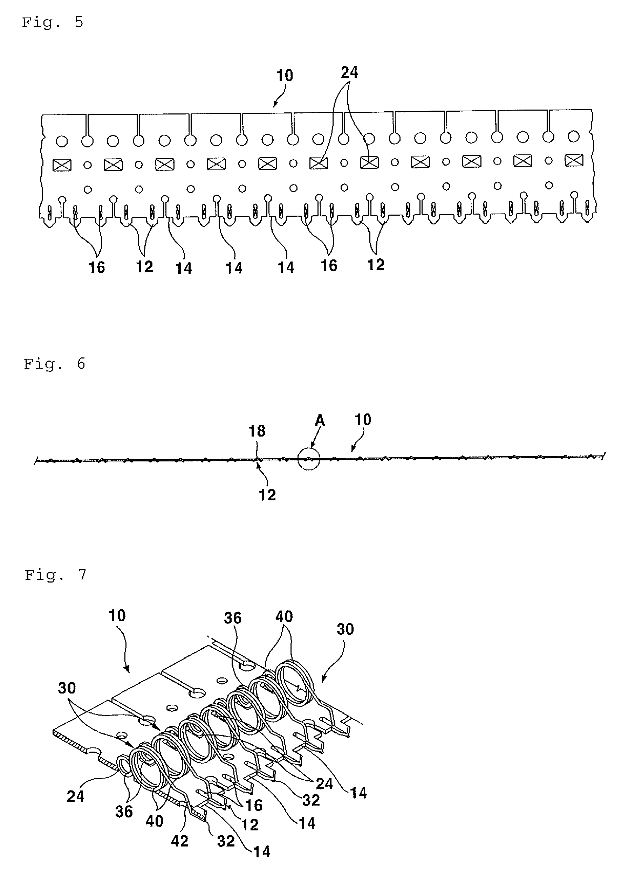

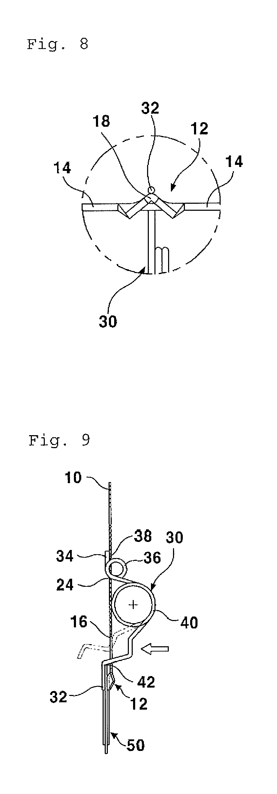

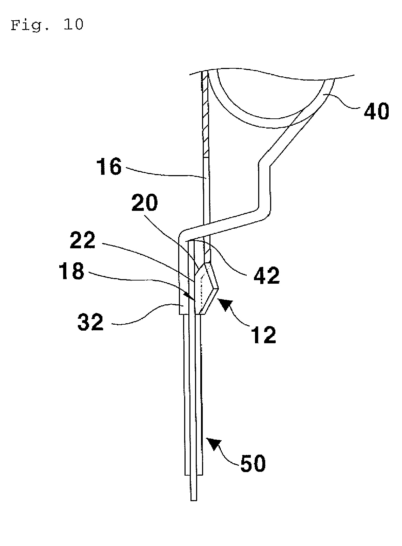

As shown in FIGS. 5 to 10, a feeding belt for strip-shaped elements according to a preferred embodiment of the present invention is configured so that, in an automated inline process, such as a plating process, during mass production of semiconductors or other elements, fingers 30 are coupled to a belt main body 10 in a predetermined pitch interval, a strip-shaped element 50 is fed in a state in which the strip-shaped element 50 is gripped between the belt main body 10 and the fingers 30, gripping protrusions 12 to grip the strip-shaped element 50 are formed at one side of the belt main body 10 in a predetermined pitch interval, a depression part 14 is formed between each of the gripping protrusions 12 and a neighboring one of the gripping protrusions 12, an installation long hole 16, in which a gripping end 32 of each of the fingers 30 is fitted, is provided at the rear part of the middle of each of the gripping protrusions 12, the gripping end 32 of each of the fingers 30 is located at the middle of a corresponding one of the gripping protrusions 12 during the installation of the fingers 30, and the end portion of each of the gripping ends 32 coincides with the end portion of a corresponding one of the gripping protrusions 12.

At this time, each of the gripping protrusions 12 has a bent projection 18 formed at the middle thereof in the longitudinal direction thereof. When the strip-shaped element 50 is loaded while being gripped between the bent projections 18 and the gripping ends 32, therefore, the strip-shaped element 50 comes into line contact with the bent projections 18. That is, contact between the strip-shaped element 50 and the bent projections 18 is minimized.

Also, each of the bent projections 18 includes a rear inclined part 20 formed at a region thereof adjacent to the belt main body 10 and a front vertical part 22 formed at a region thereof connected to the rear inclined part 20.

Also, the gripping end 32 of each of the fingers 30 is bent so as to coincide with the rear inclined part 20 and the front vertical part 22 so that the strip-shaped element 50 can be gripped between the front vertical parts 22 of the bent projections 18 and the gripping ends 32 of the fingers 30 in a state in which the front vertical parts 22, a portion of the strip-shaped element 50 and the gripping ends 32 are in tight contact with each other or are pressed against each other.

Also, the width of each of the gripping protrusions 12 is gradually decreased from a region thereof adjacent to the belt main body 10 to a region thereof distant from the belt main body 10 so that it is possible for each of the gripping protrusions 12 to exhibit gripping force efficient to grip the strip-shaped element 50, to reduce the amount of material used to manufacture the gripping protrusions 12 and to easily form the bent projections 18 using a plastic process.

Also, the belt main body 10 includes mount holes 24, in which mount parts 34 and support parts 36 of the fingers 30 are coupled, and installation long holes 16, in which the gripping ends 32 of the fingers 30 are coupled, the installation long holes 16 being formed so that an operation position is movable. Each of the mount holes 24 is formed at the upper part of the belt main body 10 halfway between each of the installation long holes 16 and a neighboring one of the installation long holes 16 so that the fingers 30 can be easily coupled in the mount holes 24. After the coupling of the fingers 30 in the mount holes 24, it is possible for the fingers 30 to smoothly operate in a state in which the left and right sides of the fingers 30 are balanced.

Also, each of the fingers 30 includes a mount part 34 provided at the end of the upper part thereof, a support part 36 extending from a position adjacent to the mount part 34 in the shape of a coil spring to elastically support the belt main body 10 and each of the fingers 30, a coupling part 38 provided between the mount part 34 and the support part 36 so that the coupling part 38 is fitted in a corresponding one of the mount holes 24, an angle change hinge part 40 extending from a position adjacent to the support part 36 in the shape of a coil spring to apply elastic gripping force to a gripping end 32 located at the end of the lower part of the belt main body 10, which is opposite to the mount part 34, and to serve as a hinge, and a bent part 42 extending from a position adjacent to the angle change hinge part 40 and bent so that the gripping end 32 is located at the end of the bent part 42.

At this time, each of the fingers 30 may be formed so that coupling parts 38, support parts 36, angle change hinge parts 40, bent parts 42 and gripping ends 32 are provided in a bilaterally symmetrical fashion with respect to the middle of the mount part 34. Both the coupling parts 38 are fitted in a corresponding one of the mount holes 24 of the belt main body 10, and the gripping ends 32 are fitted in the corresponding installation long holes 16. Consequently, each of the fingers 30 is bilaterally balanced, and therefore, stable operation of each of the fingers 30 is achieved.

Also, each of the fingers 30 is formed by bending a steel wire, and the gripping end 32 of each of the fingers 30 has a cylindrical section formed by cutting the end of the steel wire. When the strip-shaped element 50 is gripped by the fingers 30, therefore, the strip-shaped element 50 comes into line contact with the gripping ends 32 with the result that contact area between the strip-shaped element 50 and the gripping ends 32 is minimized.

Also, the bent projection 18 provided at each of the gripping protrusions 12 of the belt main body 10 and the gripping end 32 of each of the fingers 30 form a pair. The bent projections 18 and the gripping ends 32 are repeatedly provided in a predetermined pitch interval so that the strip-shaped element 50 can be repeatedly gripped in the predetermined pitch interval. During feeding of the strip-shaped element 50, therefore, the strip-shaped element 50 is sufficiently gripped so that the strip-shaped element 50 is not moved or separated between the belt main body 10 and the fingers 30.

Hereinafter, the operation of the feeding belt for strip-shaped elements with the above-stated construction according to the preferred embodiment of the present invention will be described in detail.

First, in order to achieve the coupling between the belt main body 10 and the fingers 30, the mount parts 34 and portions of the support parts 36 of the fingers 30 are fitted into the mount holes 24 previously formed at the upper part of the belt main body 10 so that the coupling parts 38 are inserted into the upper parts of the mount holes 24 in a tight contact state. The gripping ends 32 formed at the opposite sides of the fingers 30 are fitted into the installation long holes 16 formed at positions below the mount holes 24 of the belt main body 10 at the opposite sides of the mount holes 24 so that the bent parts 42 are caught in the installation long holes 16. As a result, the inside parts of the gripping ends 32 come into contact with the front vertical parts 22 of the bent projections 18, and therefore, the coupling between the belt main body 10 and the fingers 30 is achieved to properly grip the strip-shaped element 50.

At this time, each finger 30 is mounted in each pair of installation long holes 16 and each mount hole 24 formed at the belt main body 10 in a predetermined pitch interval. In this way, the fingers 30 are mounted at the whole bent main body 10. Each of the fingers 30 mounted at the bent main body 10 is elastically coupled in the belt main body 10 by the support parts 36, formed in the shape of a coil spring, of each of the fingers 30, and the grip ends 32 are elastically opened and closed by the angle change hinge parts 40, formed in the shape of a coil spring, to load and unload the strip-shaped element 50.

Also, when the strip-shaped element 50 is loaded on the belt main body 10 and gripped, one side of the upper part of the strip-shaped element 50 is gripped between the front vertical parts 22 of the belt main body 10, which are provided in a predetermined pitch interval, and the gripping ends 32 of the fingers 30, making pairs, to load the strip-shaped element 50. At this time, the strip-shaped element 50 is gripped between the front vertical parts 22 and the gripping ends 32 in a state in which the strip-shaped element 50 is in line contact with the front vertical parts 22 and the gripping ends 32 due to the structural characteristics of the front vertical parts 22 or the gripping ends 32. As described above, therefore, the strip-shaped element 50 is loaded on the belt main body 10 and is fed along the belt main body 10. Subsequently, the strip-shaped element 50 is plated in a state in which the strip-shaped element 50 is dipped in a plating bath with the result that a plating solution is applied to the whole surface of the strip-shaped element 50.

Of course, the front vertical parts 22 and the gripping ends 32 coming into line contact with the strip-shaped element 50 may be unplated due to the structural characteristics of the front vertical parts 22 or the gripping ends 32. However, such an unplated portion of the strip-shaped element 50 is very small, and therefore, the plated portion of the strip-shaped element 50 is good enough to satisfy conditions required for quality control.

Also, in order to unload the plated strip-shaped element 50 after the plating process is carried out, the gripping ends 32 of the fingers 30 are pressed from the rear parts thereof to widen the distance between the front vertical parts 22 and the gripping ends 32, and then the strip-shaped element 50 is separated from the belt main body 10. In this way, the unloading process is carried out.

As is apparent from the above description, in the feeding belt for strip-shaped elements configured so that the fingers 30 can be detachably coupled to the belt main body 10 according to the embodiment of the present invention, the strip-shaped element 50 is loaded between the belt main body 10 and the fingers 30. When the strip-shaped element 50 is plated in a state in which the strip-shaped element 50 is dipped in a plating bath during a plating process, the strip-shaped element 50 mounted between the belt main body 10 and the fingers 30 minimizes overlap portions between the strip-shaped element 50 and the belt main body 10 or the fingers 30 with the result that after the plating process, an unplated portion of the strip-shaped element 50 is minimized, thereby satisfying conditions required for quality control and thus reducing a product defect ratio. Also, during feeding of the strip-shaped element 50, the strip-shaped element 50 is sufficiently gripped so that the strip-shaped element 50 is not moved or separated between the belt main body 10 and the fingers 30 although the strip-shaped element 50 mounted between the belt main body 10 and the fingers 30 minimizes overlap portions between the strip-shaped element 50 and the belt main body 10 or the fingers 30, thereby achieving stable operation of the feeding belt for strip-shaped elements.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A feeding belt for strip-shaped elements configured so that, in an automated inline process, such as a plating process, during mass production of semiconductors or other elements, fingers are coupled to a belt main body in a predetermined pitch interval, a strip-shaped element is fed in a state in which the strip-shaped element is gripped between the belt main body and the fingers, gripping protrusions to grip the strip-shaped element are formed at one side of the belt main body in a predetermined pitch interval, a depression part is formed between each of the gripping protrusions and a neighboring one of the gripping protrusions, an installation long hole, in which a gripping end of each of the fingers is fitted, is provided at the rear part of the middle of each of the gripping protrusions, the gripping end of each of the fingers is located at the middle of a corresponding one of the gripping protrusions during the installation of the fingers, and the end portion of each of the gripping ends coincides with the end portion of a corresponding one of the gripping protrusions.

2. The feeding belt for strip-shaped elements according to claim 1, wherein each of the gripping protrusions has a bent projection formed at the middle thereof in the longitudinal direction thereof so that the strip-shaped element can come into line contact with the bent projection.

3. The feeding belt for strip-shaped elements according to claim 2, wherein each of the bent projections comprises a rear inclined part formed at a region thereof adjacent to the belt main body and a front vertical part formed at a region thereof connected to the rear inclined part.

4. The feeding belt for strip-shaped elements according to claim 1 or 3, wherein the gripping end of each of the fingers is bent so as to coincide with the rear inclined part and the front vertical part so that the strip-shaped element can be gripped between the front vertical parts of the bent projections and the gripping ends of the fingers in a state in which the front vertical parts and the gripping ends are in tight contact with each other or are pressed against each other.

5. The feeding belt for strip-shaped elements according to claim 1, wherein each of the gripping protrusions has a width gradually decreased from a region thereof adjacent to the belt main body to a region thereof distant from the belt main body.

6. The feeding belt for strip-shaped elements according to claim 1, wherein
the belt main body comprises mount holes, in which mount parts and support parts of the fingers are coupled, and installation long holes, in which the gripping ends of the fingers are coupled, the installation long holes being formed so that an operation position is movable, and wherein
each of the mount holes is formed at the upper part of the belt main body halfway between each of the installation long holes and a neighboring one of the installation long holes so that the fingers can be easily coupled in the mount holes, and the fingers can smoothly operate in a state in which the left and right sides of the fingers are balanced.

7. The feeding belt for strip-shaped elements according to claim 1, wherein each of the fingers comprises:
a mount part provided at an end of the upper part thereof;
a support part extending from a position adjacent to the mount part in the shape of a coil spring to elastically support the belt main body and each of the fingers;
a coupling part provided between the mount part and the support part so that the coupling part is fitted in a corresponding one of the mount holes;
an angle change hinge part extending from a position adjacent to the support part in the shape of a coil spring to apply elastic gripping force to a gripping end located at the end of the lower part of the belt main body, which is opposite to the mount part, and to serve as a hinge; and
a bent part extending from a position adjacent to the angle change hinge part and bent so that the gripping end is located at the end of the bent part.

8. The feeding belt for strip-shaped elements according to claim 7, wherein
each of the fingers is formed so that coupling parts, support parts, angle change hinge parts, bent parts and the gripping ends are provided in a bilaterally symmetrical fashion with respect to the middle of the mount part, and wherein
the coupling parts are fitted in a corresponding one of the mount holes of the belt main body, and the gripping ends are fitted in the corresponding installation long holes, whereby each of the fingers are bilaterally balanced, and therefore, stable operation of each of the fingers is achieved.

9. The feeding belt for strip-shaped elements according to claim 1, wherein each of the fingers is formed by bending a steel wire, and the gripping end of each of the fingers has a cylindrical section formed by cutting the end of the steel wire so that the strip-shaped element comes into line contact with the gripping ends.

10. The feeding belt for strip-shaped elements according to claim 1 or 2, wherein
the bent projection provided at each of the gripping protrusions of the belt main body and the gripping end of each of the fingers form a pair, and
the bent projections and the gripping ends are repeatedly provided in a predetermined pitch interval.
